# EUROPÄISCHE PATENTSCHRIFT

(11) **EP 3 416 346 B1**
(45) Veröffentlichungstag und Bekanntmachung des Hinweises auf die Patenterteilung: **02.03.2022**
(21) Anmeldenummer: 17176455.8
(22) Anmeldetag: 16.06.2017
(51) Int. Cl.: H04L 29/06

(54) **VERFAHREN ZUR ÜBERTRAGUNG EINER ZUSATZINFORMATION BEIM AUFBAU UND/ODER BEIM BETRIEB EINER TELEFONVERBINDUNG ZWISCHEN EINEM ERSTEN KOMMUNIKATIONSTEILNEHMER UND EINEM ZWEITEN KOMMUNIKATIONSTEILNEHMER, SYSTEM, COMPUTERPROGRAMM MIT PROGRAMMCODEMITTELN UND COMPUTERPROGRAMMPRODUKT**
METHOD FOR TRANSMITTING ADDITIONAL INFORMATION DURING THE SETUP AND/OR OPERATION OF A TELEPHONE CONNECTION BETWEEN A FIRST COMMUNICATION PARTICIPANT AND A SECOND PARTICIPANT, SYSTEM, COMPUTER PROGRAM WITH PROGRAM CODE AND COMPUTER PROGRAM PRODUCT
PROCÉDÉ DE TRANSFERT D'UNE INFORMATION COMPLÉMENTAIRE LORS DE L'ÉTABLISSEMENT ET/OU DU FONCTIONNEMENT D'UNE LIAISON TÉLÉPHONIQUE ENTRE UN PREMIER CORRESPONDANT ET UN SECOND CORRESPONDANT, SYSTÈME, PROGRAMME INFORMATIQUE COMPRENANT DES MOYENS DE CODE DE PROGRAMME ET PRODUIT-PROGRAMME D'ORDINATEUR

(43) Veröffentlichungstag der Anmeldung: 19.12.2018
(73) Patentinhaber: Deutsche Telekom AG, 53113 Bonn (DE)
(72) Erfinder: THIES, Emil, 47166 Duisburg (DE); WINTER, Alexander, 57612 Birnbach (DE)
(74) Vertreter: Schwöbel, Thilo K.

(56) Entgegenhaltungen:
- WO-A1-96/19066
- US-A1- 2003 190 024

## Beschreibung

### Stand der Technik

Die Erfindung betrifft ein Verfahren gemäß Anspruch 1 zur Übertragung einer Zusatzinformation beim Aufbau und/oder beim Betrieb einer Telefonverbindung zwischen einem ersten Kommunikationsteilnehmer und einem zweiten Kommunikationsteilnehmer, wobei der erste Kommunikationsteilnehmer den Aufbau der Telefonverbindung initiiert und wobei der zweite Kommunikationsteilnehmer der angerufene Kommunikationsteilnehmer ist, wobei beim Betrieb der Telefonverbindung der erste Kommunikationsteilnehmer und der zweite Kommunikationsteilnehmer mittels wenigstens eines Telekommunikationsnetzes des zweiten Kommunikationsteilnehmers oder mittels des Telekommunikationsnetzes des zweiten Kommunikationsteilnehmers und eines weiteren Telekommunikationsnetzes des ersten Kommunikationsteilnehmers verbunden sind.

Ferner betrifft die Erfindung System gemäß Anspruch 7 zur Übertragung einer Zusatzinformation beim Aufbau und/oder beim Betrieb einer Telefonverbindung zwischen einem ersten Kommunikationsteilnehmer und einem zweiten Kommunikationsteilnehmer, wobei der erste Kommunikationsteilnehmer den Aufbau der Telefonverbindung initiiert und wobei der zweite Kommunikationsteilnehmer der angerufene Kommunikationsteilnehmer ist, wobei beim Betrieb der Telefonverbindung der erste Kommunikationsteilnehmer und der zweite Kommunikationsteilnehmer mittels wenigstens eines Telekommunikationsnetzes des zweiten Kommunikationsteilnehmers oder mittels des Telekommunikationsnetzes und eines weiteren Telekommunikationsnetzes des ersten Kommunikationsteilnehmers verbunden sind.

Ebenso betrifft die vorliegende Erfindung ein Computerprogramm mit Programmcodemitteln gemäß Anspruch 9, mit deren Hilfe die Schritte eines Verfahrens nach einer Ausführungsform der vorliegenden Erfindung durchführbar sind, wenn das Computerprogramm auf einer programmierbaren Einrichtung, insbesondere als Teil des Telekommunikationsnetzes oder als Teil des weiteren Telekommunikationsnetzes oder als Teil des intermediären Telekommunikationsnetzes, ausgeführt wird.

Die Erfindung betrifft ferner ein Computerprogrammprodukt gemäß Anspruch 10 mit einem computerlesbaren Medium und einem auf dem computerlesbaren Medium gespeicherten Computerprogramm mit Programmcodemitteln zur Übertragung einer Zusatzinformation beim Aufbau und/oder beim Betrieb einer Telefonverbindung zwischen einem ersten Kommunikationsteilnehmer und einem zweiten Kommunikationsteilnehmer, die dazu geeignet sind, dass die Schritte eines Verfahrens nach einer Ausführungsform der vorliegenden Erfindung durchführbar sind, wenn das Computerprogramm auf einer programmierbaren Einrichtung, insbesondere als Teil des Telekommunikationsnetzes oder als Teil des weiteren Telekommunikationsnetzes oder als Teil des intermediären Telekommunikationsnetzes, ausgeführt wird.

Die WO 9619066 A1 offenbart ein System, das Caller-ID-Informationen von einem Telefonnetz an ein Fernsehgerät bereitstellt. Die US 2003190024 A1 bezieht sich auf die Anzeige von Caller-ID-Informationen.

Heutige Telefone und Smartphones weisen meist eine Datenbank mit Kontakten/Kontaktdaten auf. In vielen Fällen ist innerhalb dieser Datenbanken lediglich ein Name (als String) einer Rufnummer zugeordnet. Es ist teilweise jedoch bereits möglich, verschiedene Namensbestandteile, Bilder, Adressen etc. für einen Kontakt in einer solchen Datenbank zu hinterlegen. Ebenso gibt es Systeme und Verfahren, bei denen verschiedene Rufnummern, insbesondere verschiedene Typen von Rufnummern (beispielsweise Festnetznummern und Mobilfunknummern) oder andere Kommunikationsadressen, wie E-Mailadressen oder Nutzerprofile bei sozialen Medien-Plattformen, für einen Benutzernamen innerhalb einer solchen Datenbank in einem Telefon hinterlegt sein können. Die Verfahren sind jedoch meist umständlich, da der Nutzer häufig Daten in seiner Kontaktdatenbank (der Datenbank seines Telefons) hinterlegen muss. Des Weiteren ist eine Individualisierung einer Anzeigeinformation nur schwierig zu bewerkstelligen, da Bilder, Rufnummern, Namen etc. nur schwierig kombiniert werden können und deshalb nicht in ansprechender Weise gleichzeitig darstellbar sind (beispielsweise im Falle eines eingehenden Anrufs).

### Offenbarung der Erfindung

Es ist eine Aufgabe der vorliegenden Erfindung ein Verfahren zur Übertragung einer Zusatzinformation beim Aufbau und/oder beim Betrieb einer Telefonverbindung zwischen einem ersten Kommunikationsteilnehmer und einem zweiten Kommunikationsteilnehmer zu verbessern, so dass eine größere Individualisierung der Informationen möglich ist, die Benutzerzufriedenheit erhöht wird und/oder eine erhöhte Automatisierung ermöglicht wird.

Die Aufgabe wird erfindungsgemäß gelöst durch ein Verfahren gemäß Anspruch 1 zur Übertragung einer Zusatzinformation [additional information] beim Aufbau und/oder beim Betrieb einer Telefonverbindung [telephone connection] zwischen einem ersten Kommunikationsteilnehmer [communication user] und einem zweiten Kommunikationsteilnehmer, wobei der erste Kommunikationsteilnehmer den Aufbau der Telefonverbindung initiiert und wobei der zweite Kommunikationsteilnehmer der angerufene Kommunikationsteilnehmer [called communication user] ist, wobei beim Betrieb der Telefonverbindung der erste Kommunikationsteilnehmer und der zweite Kommunikationsteilnehmer mittels wenigstens eines Telekommunikationsnetzes des zweiten Kommunikationsteilnehmers oder mittels des Telekommunikationsnetzes des zweiten Kommunikationsteilnehmers und eines weiteren Telekommunikationsnetzes des ersten Kommunikationsteilnehmers verbunden sind, wobei die Zusatzinformation an den zweiten Kommunikationsteilnehmer als Teil einer auf die Telefonverbindung bezogenen Anrufsignalisierung übertragen wird und wobei die Zusatzinformation eine Bildinformation derart ist oder aufweist, dass die Bildinformation mittels einer synthetischen Bildgenerierung ausgehend von einer ersten Textinformation und/oder von einer zweiten Textinformation generiert ist, wobei das Verfahren die nachfolgenden Schritte aufweist:
-- in einem ersten Schritt wird die Bildinformation umfassend die erste Textinformation und/oder umfassend die zweite Textinformation generiert,
-- in einem dem ersten Schritt nachfolgenden zweiten Schritt wird die Bildinformation als Zusatzinformation mittels wenigstens des Telekommunikationsnetzes an den zweiten Kommunikationsteilnehmer übertragen.

Erfindungsgemäß ist es hierdurch in vorteilhafterweise möglich, dass eine Bildinformation als Zusatzinformation oder als Teil einer Zusatzinformation im Zuge einer auf eine Telefonverbindung bezogenen Anrufsignalisierung (beispielsweise während des Aufbaus der Telefonverbindung) an einen angerufenen und/oder anrufenden Kommunikationsteilnehmer (bzw. dessen Kommunikationsgerät) übermittelt wird (insbesondere im Zuge von "enriched calling"). Hierdurch ist es in vorteilhafterweise möglich, dass die Bildinformation nicht zwangsläufig in einem der Kommunikationsgeräte hinterlegt sein muss, also nicht durch einen Nutzer hinterlegt werden muss. Erfindungsgemäß ist es möglich, dass die Bildinformation mindestens unter Zuhilfenahme (oder aus) einer ersten Textinformation zugrundeliegenden Informationen und/oder einer zweiten Textinformation zugrundeliegenden Informationen synthetisch erzeugt bzw. generiert wird und den (textlichen) Inhalt der ersten Textinformation und/oder zweiten Textinformation (oder zumindest Teile davon) umfasst. Hierdurch ist es möglich, dass eine für die Kommunikationsteilnehmer gut erkennbare und vorteilhafte Bildinformation generiert wird, wobei eine hohe Individualisierung der Bildinformation möglich ist, was die dem ersten und/oder zweiten Kommunikationsteilnehmer auf einfache Weise zur Verfügung stellbaren Daten/Informationen erhöht. Hierdurch ergibt sich in vorteilhafterweise ein erhöhter Nutzungskomfort (beispielsweise während des Aufbaus einer Telefonverbindung). Des Weiteren ist es vorteilhaft, dass Namensinformationen, Adressinformationen, Informationen zu einer Rechtsform eines Kommunikationsteilnehmers, Informationen zu einem Firmennamen, Informationen zur Art des Telekommunikationsnetzzugangs (beispielsweise ob es sich um einen Mobilfunknetzzugang, einen Festnetzzugang, eine Mischform etc. handelt), als erste und/oder zweite Textinformation in der Bildinformation integriert werden können. Hierbei ist es besonders vorteilhaft, dass verschiedene Datenbanken am erfindungsgemäßen Verfahren beteiligt sein können.

Im Falle, dass beim Betrieb der Telefonverbindung der erste Kommunikationsteilnehmer und der zweite Kommunikationsteilnehmer mittels des Telekommunikationsnetzes des zweiten Kommunikationsteilnehmers verbunden sind, ist es in vorteilhafterweise möglich, dass das Telekommunikationsnetz ein gemeinsames Telekommunikationsnetz des ersten und zweiten Kommunikationsteilnehmers ist.

Gemäß einer Ausführungsform der Erfindung ist es vorgesehen, dass die erste Textinformation eine sich auf den ersten Kommunikationsteilnehmer beziehende Information ist und dass die zweite Textinformation eine sich auf das Telekommunikationsnetz oder das weitere Telekommunikationsnetz oder ein intermediäres Telekommunikationsnetz beziehende Information ist,
wobei insbesondere die Bildinformation, die die Zusatzinformation ist oder von dieser aufgewiesen wird, auf der Basis einer Ursprungsbildinformation generiert wird, wobei insbesondere die Bildinformation als Ergänzung auf der Ursprungsbildinformation eingefügt wird und/oder die Ursprungsbildinformation zumindest teilweise ersetzt, wobei die Ursprungsbildinformation insbesondere durch den ersten Kommunikationsteilnehmer und/oder durch das weitere Telekommunikationsnetz und/oder durch das weitere Telekommunikationsnetz übertragen wird.

Hierbei ist es gemäß einer Ausführungsform der Erfindung in vorteilhafterweise möglich, dass eine für die Kommunikationsteilnehmer gut erkennbare und vorteilhafte Bildinformation generiert wird, welche die Erkennung des jeweils anderen Kommunikationsteilnehmers und/oder des Telekommunikationsnetz und/oder des weiteren Telekommunikationsnetz und/oder des intermediären Telekommunikationsnetz erleichtert. Es ist ebenso möglich, dass zusätzliche Inhalte, welche das Telekommunikationsnetz und/oder das weitere Telekommunikationsnetz und/oder das intermediäres Telekommunikationsnetz betreffen oder von diesem bereitgestellt werden, durch die zweite Textinformation Einzug in die Bildinformation finden, wodurch auf technische einfache Weise zusätzliche Inhalte an den ersten und/oder zweiten Kommunikationsteilnehmer übermittelt werden können. Des Weiteren ist es gemäß einer Ausführungsform der vorliegenden Erfindung möglich, dass zur (insbesondere synthetischen) Erzeugung der Bildinformation eine Ursprungsbildinformation verwendet wird. Dadurch ist es möglich, dass eine technisch einfache Generierung der Bildinformation stattfindet, wobei es gleichzeitig möglich ist, dass die optische Ausprägung der Bildinformation (beispielsweise die Anordnung einzelner Bestandteile wie beispielsweise die Anordnung einer ersten Textinformation und/oder einer zweiten Textinformation) mit hoher Flexibilität vorgenommen werden kann. Des Weitern ist es möglich, dass mithilfe der Ursprungsbildinformation weitere Inhalte (in Form von Bildern/eines Bildes) in die Bildinformation integriert werden, insbesondere festgelegt durch den ersten Kommunikationsteilnehmer und/oder durch das weitere Telekommunikationsnetz und/oder durch das weitere Telekommunikationsnetz (und/oder durch das intermediäre Telekommunikationsnetz), wodurch sich eine hohe Individualisierungsmöglichkeit ergibt. Es ist dadurch ebenso möglich, dass beispielsweise angereicherte Inhalte (beispielsweise mittels der zweiten Textinformation und insbesondere betreffend oder durch das Telekommunikationsnetz/weitere Telekommunikationsnetz/intermediäre Telekommunikationsnetz) in die Bildinformation eingebracht werden und beispielsweise bereits während eines Anrufsaufbaus dem (ersten oder zweiten) Kommunikationsteilnehmer mitgeteilt/übermittelt werden.

Gemäß einer Ausführungsform der Erfindung ist es vorgesehen, dass die Bildinformation beim ersten Kommunikationsteilnehmer gemäß einer oder mehrerer der nachfolgenden Alternativen generiert wird:
-- die der ersten Textinformation und/oder zweiten Textinformation zugrundeliegenden Informationen werden beim ersten Kommunikationsteilnehmer erfasst, insbesondere unter Nutzung einer graphischen Benutzerschnittstelle,
-- die der ersten Textinformation und/oder zweiten Textinformation zugrundeliegenden Informationen werden aus beim ersten Kommunikationsteilnehmer aus bereits vorhandenen Daten generiert,
-- die der ersten Textinformation und/oder zweiten Textinformation zugrundeliegenden Informationen werden durch den ersten Kommunikationsteilnehmer von einem übergeordnetem Datenlieferanten bezogen, insbesondere mithilfe einer direkten Abfrage von Daten durch den ersten Kommunikationsteilnehmer beim Datenlieferanten oder mithilfe einer Abfrage von beim ersten Kommunikationsteilnehmer zwischengespeicherten Daten des Datenlieferanten.

Hierbei ist es gemäß einer Ausführungsform der Erfindung in vorteilhafterweise möglich, dass Bildinformation beim ersten Kommunikationsteilnehmer, insbesondere synthetisch, generiert wird, wobei der erste Kommunikationsteilnehmer beispielsweise der Anrufende ist. Somit ist es möglich, dass die Generierung der Bildinformation auf dem Kommunikationsgerät (bzw. Benutzergerät) des ersten Kommunikationsteilnehmers durchführbar ist. Es ist möglich, dass die der ersten Textinformation und/oder zweiten Textinformation zugrundeliegenden Informationen von einem übergeordneten Datenlieferanten an den ersten Kommunikationsteilnehmer übermittelt werden.

Gemäß einer Ausführungsform der Erfindung ist es vorgesehen, dass die Bildinformation durch das weitere Telekommunikationsnetz gemäß einer oder mehrerer der nachfolgenden Alternativen generiert wird:
-- die der ersten Textinformation und/oder zweiten Textinformation zugrundeliegenden Informationen werden aus einer Datenbank des weiteren Telekommunikationsnetzes bezogen,
-- die der ersten Textinformation und/oder zweiten Textinformation zugrundeliegenden Informationen werden durch das weitere Telekommunikationsnetz von einem übergeordnetem Datenlieferanten bezogen, insbesondere mithilfe einer direkten Abfrage von Daten durch das weitere Telekommunikationsnetz beim Datenlieferanten.

Hierbei ist es gemäß einer Ausführungsform der Erfindung in vorteilhafterweise möglich, dass die (synthetische) Generierung der Bildinformation durch das weitere Telekommunikationsnetz vorgenommen wird, wodurch es möglich ist, auf eine umständliche Ansammlung von den Textinformationen zugrunde liegenden Informationen in den Kommunikationsgeräten zu verzichten. Hingegen ist es in vorteilhafterweise möglich, dass beispielsweise eine Datenbank des weiteren Telekommunikationsnetz (oder eine Datenbank auf die das weitere Telekommunikationsnetz Zugriff hat, die aber einem anderen Telekommunikationsnetz zugeordnet ist) Verwendung findet, wobei die der ersten Textinformation und/oder zweiten Textinformation zugrundeliegenden Informationen der Datenbank hinterlegt sind. Hierbei ist es in vorteilhafterweise möglich, die Automatisierung zu erhöhen.

Gemäß einer Ausführungsform der Erfindung ist es vorgesehen, dass die Bildinformation durch das intermediäre Telekommunikationsnetz gemäß einer oder mehrerer der nachfolgenden Alternativen generiert wird:
-- die der ersten Textinformation und/oder zweiten Textinformation zugrundeliegenden Informationen werden aus einer Datenbank des intermediären Telekommunikationsnetzes bezogen,
-- die der ersten Textinformation und/oder zweiten Textinformation zugrundeliegenden Informationen werden durch das intermediäre Telekommunikationsnetz von einem übergeordneten Datenlieferanten bezogen, insbesondere mithilfe einer direkten Abfrage von Daten durch das intermediäre Telekommunikationsnetz beim Datenlieferanten.

Hierbei ist es gemäß einer Ausführungsform der Erfindung in vorteilhafterweise möglich, dass ein intermediäres Telekommunikationsnetz die Bildinformation generiert. Dabei ist es bevorzugt möglich, dass die der ersten Textinformation und/oder zweiten Textinformation zugrundeliegenden Informationen von einem übergeordneten Datenlieferanten an das intermediäre Telekommunikationsnetz übermittelt werden (insbesondere, wenn die der ersten Textinformation und/oder zweiten Textinformation zugrundeliegenden Informationen vorher durch das Telekommunikationsnetz oder das weitere Telekommunikationsnetz an den übergeordneten Datenlieferanten übermittelt wurden). Es ist ebenso in vorteilhafterweise möglich, dass das intermediäre Telekommunikationsnetz die der ersten Textinformation und/oder zweiten Textinformation zugrundeliegenden Informationen von einer Datenbank des Telekommunikationsnetz oder des weiteren Telekommunikationsnetz erhält bzw. übermittelt bekommt. Hierbei ist es in vorteilhafterweise möglich, die Automatisierung zu erhöhen.

Gemäß einer Ausführungsform der Erfindung ist es vorgesehen, dass die Bildinformation durch das Telekommunikationsnetz gemäß einer oder mehrerer der nachfolgenden Alternativen generiert wird:
-- die der ersten Textinformation und/oder zweiten Textinformation zugrundeliegenden Informationen werden aus einer Datenbank des Telekommunikationsnetz bezogen,
-- die der ersten Textinformation und/oder zweiten Textinformation zugrundeliegenden Informationen werden durch das Telekommunikationsnetz von einem übergeordneten Datenlieferanten bezogen, insbesondere mithilfe einer direkten Abfrage von Daten durch das Telekommunikationsnetz beim Datenlieferanten.

Hierbei ist es gemäß einer Ausführungsform der Erfindung in vorteilhafterweise möglich, dass das Telekommunikationsnetz die Bildinformation generiert. Dabei ist es bevorzugt möglich, dass die der ersten Textinformation und/oder zweiten Textinformation zugrundeliegenden Informationen von einem übergeordneten Datenlieferanten an das Telekommunikationsnetz übermittelt werden (insbesondere, wenn die der ersten Textinformation und/oder zweiten Textinformation zugrundeliegenden Informationen vorher durch das weitere Telekommunikationsnetz an den übergeordneten Datenlieferanten übermittelt wurden). Es ist ebenso in vorteilhafterweise möglich, dass das Telekommunikationsnetz die der ersten Textinformation und/oder zweiten Textinformation zugrundeliegenden Informationen von einer Datenbank des weiteren Telekommunikationsnetz erhält bzw. übermittelt bekommt. Hierbei ist es in vorteilhafterweise möglich, die Automatisierung zu erhöhen.

Erfindungsgemäß ist es möglich, dass das Telekommunikationsnetz, das weitere Telekommunikationsnetz oder das intermediäre Telekommunikationsnetz den nachfolgenden/anderen Entitäten (oder Teilen) des erfindungsgemäßen Systems signalisiert, dass die Zusatzinformation entsprechend einer Ausführungsform der vorliegenden Erfindung generiert wurde und potentiell anhand einer solchen Signalisierung durch eine vorhergehende/andere Entität (oder einen Teil) des erfindungsgemäßen Systems entsprechend im Generierungsprozess agiert.

Ferner wird die Aufgabe erfindungsgemäß gelöst durch ein System gemäß Anspruch 7 zur Übertragung einer Zusatzinformation beim Aufbau und/oder beim Betrieb einer Telefonverbindung zwischen einem ersten Kommunikationsteilnehmer und einem zweiten Kommunikationsteilnehmer, wobei der erste Kommunikationsteilnehmer den Aufbau der Telefonverbindung initiiert und wobei der zweite Kommunikationsteilnehmer der angerufene Kommunikationsteilnehmer ist, wobei beim Betrieb der Telefonverbindung der erste Kommunikationsteilnehmer und der zweite Kommunikationsteilnehmer mittels wenigstens eines Telekommunikationsnetzes des zweiten Kommunikationsteilnehmers oder mittels des Telekommunikationsnetzes und eines weiteren Telekommunikationsnetzes des ersten Kommunikationsteilnehmers verbunden sind, wobei die Zusatzinformation an den zweiten Kommunikationsteilnehmer als Teil einer auf die Telefonverbindung bezogenen Anrufsignalisierung übertragen wird und wobei die Zusatzinformation eine Bildinformation derart ist oder aufweist, dass die Bildinformation mittels einer synthetischen Bildgenerierung ausgehend von einer ersten Textinformation und/oder von einer zweiten Textinformation generiert ist, wobei das System derart konfiguriert ist, dass die Bildinformation umfassend die erste Textinformation und/oder umfassend die zweite Textinformation generiert wird und nachfolgend die Bildinformation als Zusatzinformation mittels wenigstens des Telekommunikationsnetzes an den zweiten Kommunikationsteilnehmer übertragen wird.

Hierbei ist es erfindungsgemäß möglich, dass das erfindungsgemäße System alle im Zuge der obigen Ausführungsformen des erfindungsgemäßen Verfahrens beschriebenen Vorteile und vorteilhaften Ausprägungen aufweist.

Die Aufgabe wird erfindungsgemäß ferner gelöst durch ein Computerprogramm mit Programmcodemitteln gemäß Anspruch 9 mit deren Hilfe die Schritte eines Verfahrens nach einer Ausführungsform der vorliegenden Erfindung durchführbar sind, wenn das Computerprogramm auf einer programmierbaren Einrichtung, insbesondere als Teil des Telekommunikationsnetzes oder als Teil des weiteren Telekommunikationsnetzes oder als Teil des intermediären Telekommunikationsnetzes, ausgeführt wird.

Des Weiteren wird die Aufgabe erfindungsgemäß gelöst durch ein Computerprogrammprodukt gemäß Anspruch 10 mit einem computerlesbaren Medium und einem auf dem computerlesbaren Medium gespeicherten Computerprogramm mit Programmcodemitteln zur Übertragung einer Zusatzinformation beim Aufbau und/oder beim Betrieb einer Telefonverbindung zwischen einem ersten Kommunikationsteilnehmer und einem zweiten Kommunikationsteilnehmer, die dazu geeignet sind, dass die Schritte eines Verfahrens nach einer Ausführungsform der vorliegenden Erfindung durchführbar sind, wenn das Computerprogramm auf einer programmierbaren Einrichtung, insbesondere als Teil des Telekommunikationsnetzes oder als Teil des weiteren Telekommunikationsnetzes oder als Teil des intermediären Telekommunikationsnetzes, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken wie durch die Ansprüche definiert nicht einschränken.

### Kurze Beschreibung der Zeichnungen

Figur 1 zeigt schematisch ein System zur Übertragung einer Zusatzinformation beim Aufbau und/oder beim Betrieb einer Telefonverbindung zwischen einem ersten Kommunikationsteilnehmer und einem zweiten Kommunikationsteilnehmer gemäß einer Ausführungsform der vorliegenden Erfindung.
Figur 2 zeigt schematisch die Erzeugung einer Zusatzinformation gemäß einer Ausführungsform der vorliegenden Erfindung.
Figur 3 zeigt schematisch fünf beispielhafte Ausführungsformen einer Bildinformation gemäß Ausführungsformen der vorliegenden Erfindung.
Figur 4 zeigt schematisch fünf weitere beispielhafte Ausführungsformen einer Bildinformation gemäß Ausführungsformen der vorliegenden Erfindung.
Figur 5 zeigt schematisch vier beispielhafte Ausführungsformen einer Bildinformation gemäß Ausführungsformen der vorliegenden Erfindung, um Konflikte, die sich aus der Kombination von Ausführungsformen der Figuren 3 und 4 ergeben, aufzulösen.

### Ausführungsformen der Erfindung

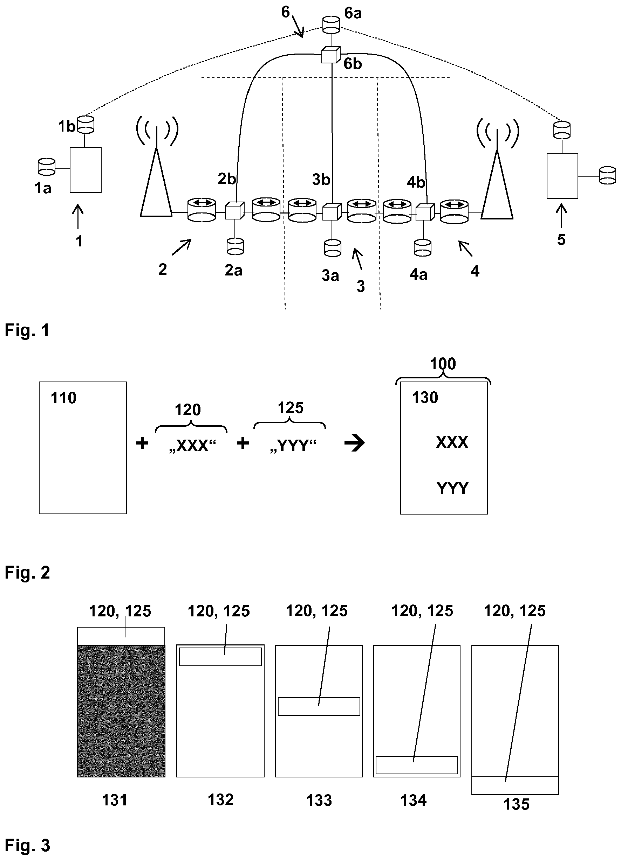

In Figur 1 ist schematisch ein System zur Übertragung einer Zusatzinformation 100 beim Aufbau und/oder beim Betrieb einer Telefonverbindung zwischen einem ersten Kommunikationsteilnehmer 1 und einem zweiten Kommunikationsteilnehmer 5 gemäß einer Ausführungsform der vorliegenden Erfindung gezeigt. Das System umfasst dabei ein Telekommunikationsnetz 4 des zweiten Kommunikationsteilnehmers 5 und optional ein weiteres Telekommunikationsnetz 2 des ersten Kommunikationsteilnehmers 1 sowie optional einen übergeordneten Datenlieferanten 6 und optional ein intermediäres Telekommunikationsnetz 3. Der erste Kommunikationsteilnehmer 1 startet/initiiert den Aufbau der Telefonverbindung und der zweite Kommunikationsteilnehmer 5 ist der angerufene Kommunikationsteilnehmer. Es ist beispielsweise möglich, dass die Telefonverbindung über Netzkomponenten/-entitäten des Telekommunikationsnetzes 4, des weiteren Telekommunikationsnetzes 2 und des intermediären Telekommunikationsnetzes 3 läuft. Hierzu weist das Telekommunikationsnetz 4 und das weitere Telekommunikationsnetz 2 typischerweise jeweils ein Zugangsnetz mit Basisstationen auf (jeweils eine Basisstation ist für beide Zugangsnetze gezeigt). Es ist möglich, dass das Telekommunikationsnetz 4, das weitere Telekommunikationsnetz 2 und das intermediäre Telekommunikationsnetz 3 jeweils ein Kernnetz aufweisen, bzw. verschieden für den Verbindungsaufbau und die Bereitstellung der Verbindung nötige Entitäten. Der erste Kommunikationsteilnehmer 1, der zweite Kommunikationsteilnehmer 5, das Telekommunikationsnetz 4, das weitere Telekommunikationsnetz 2 und das intermediäre Telekommunikationsnetz 3 sind in Figur 1 schematisch durch gestrichelte Linien voneinander abgetrennt. Die Zusatzinformation 100 wird an den zweiten Kommunikationsteilnehmer 5 als Teil einer auf die Telefonverbindung bezogenen Anrufsignalisierung übertragen. Bei der Zusatzinformation 100 handelt es sich um eine Bildinformation 130 oder die Zusatzinformation 100 umfasst eine Bildinformation. Die Bildinformation 130 wird mittels einer synthetischen Bildgenerierung ausgehend von einer ersten Textinformation 120 und/oder von einer zweiten Textinformation 125 generiert. Die Bildinformation 130 kann auf der Basis einer Ursprungsbildinformation 110 erzeugt/generiert werden. Es ist möglich, dass die Bildinformation 130 als Ergänzung auf der Ursprungsbildinformation 110 eingefügt wird und/oder die Ursprungsbildinformation 110 zumindest teilweise oder gänzlich ersetzt. Des Weiteren ist es möglich, dass die Ursprungsbildinformation 110 durch den ersten Kommunikationsteilnehmer 1 und/oder durch das weitere Telekommunikationsnetz 2 und/oder durch das Telekommunikationsnetz 4 die Entität (also den ersten Kommunikationsteilnehmer 1, das weitere Telekommunikationsnetz 2, das Telekommunikationsnetz 4, das intermediäre Telekommunikationsnetz 3) übertragen wird, an der die Generierung/Erzeugung stattfindet. Die erste Textinformation 120 ist eine sich auf den ersten Kommunikationsteilnehmer 1 beziehende Information und die zweite Textinformation 125 ist eine sich auf das Telekommunikationsnetz 4 und/oder das weitere Telekommunikationsnetz 2 und/oder ein intermediäres Telekommunikationsnetz 3 beziehende Information. Erfindungsgemäß gibt es verschiedene Möglichkeiten zur Generation der Bildinformation.

Es ist möglich, dass die Bildinformation 130 beim ersten Kommunikationsteilnehmer 1 gemäß einer oder mehrerer der nachfolgenden Alternativen generiert wird:
-- die der ersten Textinformation 120 und/oder zweiten Textinformation 125 zugrundeliegenden Informationen werden beim ersten Kommunikationsteilnehmer erfasst, beispielsweise unter Nutzung einer graphischen Benutzerschnittstelle oder auch einer Audioschnittstelle,
-- die der ersten Textinformation 120 und/oder zweiten Textinformation 125 zugrundeliegenden Informationen werden aus beim ersten Kommunikationsteilnehmer 1 aus bereits vorhandenen Daten 1a generiert,
-- die der ersten Textinformation 120 und/oder zweiten Textinformation 125 zugrundeliegenden Informationen werden durch den ersten Kommunikationsteilnehmer 1 von einem übergeordnetem Datenlieferanten 6 bezogen, insbesondere mithilfe einer direkten Abfrage von Daten 6a durch den ersten Kommunikationsteilnehmer 1 beim Datenlieferanten 6 oder mithilfe einer Abfrage von beim ersten Kommunikationsteilnehmer 1 durch den Datenlieferanten 6 zwischengespeicherten Daten 1b.

Es ist auch möglich, dass die Bildinformation 130 durch das weitere Telekommunikationsnetz 2 (bzw. eine Entität des weiteren Telekommunikationsnetzes 2) gemäß einer oder mehrerer der nachfolgenden Alternativen generiert wird:
-- die der ersten Textinformation 120 und/oder zweiten Textinformation 125 zugrundeliegenden Informationen werden aus einer Datenbank 2a des weiteren Telekommunikationsnetzes 2 bezogen,
-- die der ersten Textinformation 120 und/oder zweiten Textinformation 125 zugrundeliegenden Informationen werden durch das weitere Telekommunikationsnetz 2 von einem übergeordnetem Datenlieferanten 6 bezogen, beispielsweise mithilfe einer direkten Abfrage von Daten 2b durch das weitere Telekommunikationsnetz 2 beim Datenlieferanten 6.

Ferner ist es möglich, dass die Bildinformation 130 durch das intermediäre Telekommunikationsnetz 3 (bzw. eine Entität des intermediären Telekommunikationsnetzes 3) gemäß einer oder mehrerer der nachfolgenden Alternativen generiert wird:
-- die der ersten Textinformation 120 und/oder zweiten Textinformation 125 zugrundeliegenden Informationen werden aus einer Datenbank 3a des intermediären Telekommunikationsnetzes 3 bezogen,
-- die der ersten Textinformation 120 und/oder zweiten Textinformation 125 zugrundeliegenden Informationen werden durch das intermediäre Telekommunikationsnetz 3 von einem übergeordneten Datenlieferanten 6 bezogen, beispielsweise mithilfe einer direkten Abfrage von Daten 3b durch das intermediäre Telekommunikationsnetz 3 beim Datenlieferanten 6.

Ferner ist es möglich, dass die Bildinformation 130 durch das Telekommunikationsnetz 4 (bzw. eine Entität des Telekommunikationsnetzes 4) gemäß einer oder mehrerer der nachfolgenden Alternativen generiert wird:
-- die der ersten Textinformation 120 und/oder zweiten Textinformation 125 zugrundeliegenden Informationen werden aus einer Datenbank 4a des Telekommunikationsnetz 4 bezogen,
-- die der ersten Textinformation 120 und/oder zweiten Textinformation 125 zugrundeliegenden Informationen werden durch das Telekommunikationsnetz 4 von einem übergeordneten Datenlieferanten 6 bezogen, beispielsweise mithilfe einer direkten Abfrage von Daten 4b.

Es ist erfindungsgemäß möglich, dass der Datenlieferant 6 eine Entität 6b aufweist, welche an der Abfrage der der Textinformation 120 und/oder zweiten Textinformation 125 zugrundeliegenden Informationen beteiligt ist und/oder an der Übermittlung dieser Informationen an den Kommunikationsteilnehmer 1, das Telekommunikationsnetzes 4, das weitere Telekommunikationsnetz 2 oder das intermediäre Telekommunikationsnetz 4.

Bevorzugt wird die Zusatzinformation 100 durch das Telekommunikationsnetz 4, das weitere Telekommunikationsnetz 2, das intermediäre Telekommunikationsnetz 3 oder den ersten Kommunikationsteilnehmer 1 in die Anrufsignalisierung eingebracht, abhängig davon, bei welcher dieser Entitäten (Telekommunikationsnetz 4, weiteres Telekommunikationsnetz 2, intermediäres Telekommunikationsnetz 3, Kommunikationsteilnehmer 1) die Generierung der Bildinformation 130 stattgefunden hat.

Nachdem die Bildinformation 130 generiert wurde, wird die Bildinformation 130 als Zusatzinformation 100 oder als Teil der Zusatzinformation 100 an den zweiten Kommunikationsteilnehmer 5 übertragen und insbesondere diesem dargestellt.

In Figur 2 ist schematisch die Erzeugung einer Zusatzinformation 100 gemäß einer Ausführungsform der vorliegenden Erfindung gezeigt. Die Zusatzinformation 100 umfasst dabei eine Bildinformation 130. In einem ersten Schritt wird die Bildinformation 130 aus einer ersten Textinformation 120, einer zweiten Textinformation 125 sowie einer Ursprungsbildinformation 110 mittels einer synthetischen Bildgenerierung erzeugt. Die Erzeugung der Bildinformation während des ersten Schritts geschieht dabei bevorzugt beim ersten Kommunikationsteilnehmer 1 (bzw. in einem Kommunikationsgerät, wie einem Smartphone, des ersten Kommunikationsteilnehmers 1). Es ist insbesondere möglich, dass die erste Textinformation 120 eine sich auf den ersten Kommunikationsteilnehmer 1 beziehende Information ist (also, beispielsweise eine Angabe zum ersten Kommunikationsteilnehmer 1 beinhaltet, anhand derer dieser identifizierbar ist oder die zusätzliche Informationen zum ersten Kommunikationsteilnehmer 1 enthält, wie beispielsweise eine Namensinformation, eine Adressinformation, eine Information zu einer Rechtsform, einen Firmennamen, eine Information zur Art des Telekommunikationsnetzzugangs (beispielsweise "mobil"), etc.) und dass die zweite Textinformation 125 eine sich auf ein Telekommunikationsnetz 4 oder ein weiteres Telekommunikationsnetz 2 oder ein intermediäres Telekommunikationsnetz 3 beziehende Information ist. Die zweite Textinformation 125 kann dabei beispielsweise einen Namen oder Namensteil oder ein Akronym des Telekommunikationsnetzes 4 und/oder des weiteren Telekommunikationsnetz 2 und/oder des intermediären Telekommunikationsnetz 3 umfassen oder gänzlich andere Informationen, die der Betreiber des jeweiligen Telekommunikationsnetz übermitteln möchte wie zum Beispiel Werbung. Die erste Textinformation 120 und die zweite Textinformation 125 sind nach der Generierung der Bildinformation 130 erfindungsgemäß bevorzugt in der Bildformation 130 enthalten. Es ist also beispielsweise möglich, dass die erste Textinformation 120 den Namen "XXX" des ersten Kommunikationsteilnehmer 1 enthält und die zusätzlich die Information "geschäftlich". Die zweite Textinformation 125 enthält beispielsweise den Namen des Telekommunikationsnetzes "YYY" und zusätzlich den Ausdruck "powered by". Es ist demnach möglich, dass in der generierten Bildinformation 130, der Text "XXX, geschäftlich, powered by YYY" zu lesen ist. Die Ursprungsbildinformation 110 kann beispielsweise einfach ein schwarzer, weißer oder farbiger Hintergrund sein, auf dem die erste Textinformation 120 und die zweite Textinformation 125 angeordnet werden (als Teil der Generierung der Bildinformation 130). Es ist allerdings ebenso möglich, dass die Ursprungsbildinformation 110 ein oder mehrere beliebige wählbare Motive aufweist.

In Figur 3 sind schematisch fünf beispielhafte Ausführungsformen einer Bildinformation 131, 132, 133, 134, 135 gemäß Ausführungsformen der vorliegenden Erfindung gezeigt. Die fünf beispielhaften Ausführungsformen einer Bildinformation 131, 132, 133, 134, 135 weisen dabei jeweils zumindest eine Ursprungsbildinformation 110, insbesondere als Hintergrundbild, auf. Darüber hinaus umfassen die fünf beispielhaften Ausführungsformen einer Bildinformation 131, 132, 133, 134, 135 jeweils eine erste Textinformation 120 und/oder zweite Textinformation 125, wobei die erste Textinformation 120 und/oder zweite Textinformation 125 horizontal auf der Hintergrundinformation 110 (innerhalb der jeweiligen beispielhaften Ausführungsform einer Bildinformation 132, 133, 134) oder über oder unter der Hintergrundinformation 110 (innerhalb der jeweiligen beispielhaften Ausführungsform einer Bildinformation 131, 135) angeordnet ist. Insbesondere ist es möglich, dass lediglich eine erste Textinformation 120 oder einer eine zweite Textinformation 125 in der jeweiligen beispielhaften Ausführungsform einer Bildinformation 131, 132, 133, 134, 135 enthalten ist. Die beispielhaften Ausführungsformen können für die erste Textinformation 120 und zweite Textinformation 125 unterschiedlich gewählt werden. So würde die 131 oberhalb und die 135 unterhalb der Ursprungsbildinformation 110 die Textinformation hinzufügen. Sollte die gleiche Ausführungsform für beide Textinformationen gewählt werden, muss über ein Flag bestimmt sein, welche von beiden die Priorität (hier oberhalb der anderen) besitzt.

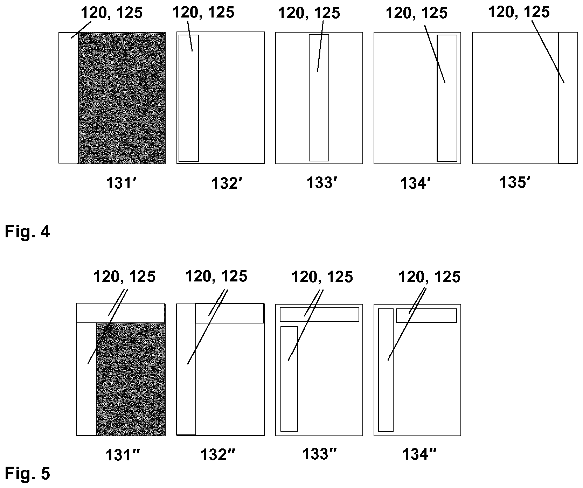

In Figur 4 sind schematisch fünf weitere beispielhafte Ausführungsformen einer Bildinformation 131', 132', 133', 134', 135' gemäß Ausführungsformen der vorliegenden Erfindung gezeigt. Die fünf weiteren beispielhaften Ausführungsformen einer Bildinformation 131', 132', 133', 134', 135' weisen dabei jeweils zumindest eine Ursprungsbildinformation 110, insbesondere als Hintergrundbild, auf. Darüber hinaus umfassen die fünf weiteren beispielhaften Ausführungsformen einer Bildinformation 131', 132', 133', 134', 135' eine erste Textinformation 120 und/oder zweite Textinformation 125, wobei die erste Textinformation 120 und/oder zweite Textinformation 125 vertikal auf der Hintergrundinformation 110 (innerhalb der jeweiligen weiteren beispielhaften Ausführungsform einer Bildinformation 132', 133', 134') oder (vertikal) links oder rechts neben der Hintergrundinformation 110 (bei der jeweiligen weiteren beispielhaften Ausführungsform einer Bildinformation 131', 135') angeordnet ist. Insbesondere ist es möglich, dass lediglich eine erste Textinformation 120 oder einer eine zweite Textinformation 125 in der jeweiligen weiteren beispielhaften Ausführungsformen einer Bildinformation 131', 132', 133', 134', 135' enthalten ist. Die beispielhaften Ausführungsformen können für die erste Textinformation 120 und zweite Textinformation 125 unterschiedlich gewählt werden. So würde die 131' links und die 135 rechts der Ursprungsbildinformation 110 die Textinformation hinzufügen. Sollte die gleiche Ausführungsform für beide Textinformationen gewählt werden, muss über ein Flag bestimmt sein, welche von beiden die Priorität (hier links der anderen) besitzt. Zusätzlich muss bei der vertikalen Abbildung je Textinformation ein Flag zur Ausrichtung des Textes (von oben nach unten bzw. 180° gedreht von unten nach oben)

In Figur 5 wird mit vier noch weitere beispielhafte Ausführungsformen einer Bildinformation 131", 132", 133", 134" gemäß Ausführungsformen der vorliegenden Erfindung aufgezeigt, wie Konflikte bei der Kombination einer horizontalen Ausführungsform aus Figur 3 und einer vertikalen Ausführungsform aus Figur 4 aufgelöst werden können. Die vier noch weiteren beispielhaften Ausführungsformen einer Bildinformation 131", 132", 133", 134" weisen dabei jeweils zumindest eine Ursprungsbildinformation 110, insbesondere als Hintergrundbild, auf. Darüber hinaus umfassen die vier noch weiteren beispielhaften Ausführungsformen einer Bildinformation 131", 132", 133", 134" jeweils eine erste Textinformation 120 und eine zweite Textinformation 125, wobei die erste Textinformation 120 und horizontal auf der Hintergrundinformation 110 und die zweite Textinformation 125 vertikal auf der Hintergrundinformation 110 angeordnet sind oder umgekehrt. Es ist dabei möglich, dass die erste Textinformation 120 und die zweite Textinformation 125 jeweils direkt am Rand der Ursprungsbildinformation 110 angrenzen, wie für die noch weiteren beispielhaften Ausführungsformen einer Bildinformationen 131", 132" dargestellt, oder auch über den Ran hinausgehen. Es ist ebenso möglich, dass die erste Textinformation 120 und die zweite Textinformation 125 jeweils mit einem Abstand zum Rand der Ursprungsbildinformation 110 angeordnet werden, wie in für die noch weiteren beispielhaften Ausführungsformen einer Bildinformationen 133", 134" dargestellt. Über das Flag zur Priorität, wird in einem Konfliktfall festgelegt, welche Textinformation die volle Länge bzw. Breite zur Verfügung hat. In Figur 5 wurde der exemplarisch Konflikt in die linke obere Ecke dargestellt, er wird aber für alle anderen Ecken vergleichbar aufgelöst. Ein Konflikt einer Ausführungsform am Rand (132, 132', 134, 134') mit einer orthogonalen Ausführungsform in der Mitte (133, 133') wird mit einer automatischen Priorität der Ausführungsform am Rand (132, 132', 134, 134') aufgelöst, damit diese nicht unterbrochen wird. Insofern gibt es für den Kreuzkonflikt von 133 und 133' keine automatisch Auflösung, sodass sich diese Kombination ausschließt.

Allein mit den beispielhaft aufgezeigten Ausführungsformen und Konfigurationsparametern ergeben sich 253 Möglichkeiten für die Anordnung der ersten Textinformation 120, der zweiten Textinformation 125 und der Hintergrundbildinformation 110, was in vorteilhafterweise ein hohes Maß an Individualisierung zulässt und sich vorteilhaft auf die Übersichtlichkeit und die Benutzerzufrieden auswirken kann.

Sollte zu Beginn der synthetischen Bildgeneration keine Ursprungsbildinformation / Hintergrundbildinformation 110 vorliegen, so wird diese im Rahmen der synthetischen Bildgeneration zuerst erzeugt. Hierzu kann ein, für diesen Fall, hinterlegtes Default-Bildes genutzt werden. Alternativ kann dieser Vorgang aber bereits auch eine synthetische Bildgeneration sein, der im Minimalfall die Parameter Größe (Höhe und Breite) sowie eine Hintergrundfarbe nutzt.

## Patentansprüche

1. Verfahren zur Übertragung einer Zusatzinformation (100) beim Aufbau und/oder beim Betrieb einer Telefonverbindung zwischen einem ersten Kommunikationsteilnehmer (1) und einem zweiten Kommunikationsteilnehmer (5), wobei der erste Kommunikationsteilnehmer (1) den Aufbau der Telefonverbindung initiiert und wobei der zweite Kommunikationsteilnehmer (5) der angerufene Kommunikationsteilnehmer [called communication user] ist, wobei beim Betrieb der Telefonverbindung der erste Kommunikationsteilnehmer (1) und der zweite Kommunikationsteilnehmer (5) mittels wenigstens eines Telekommunikationsnetzes (4) des zweiten Kommunikationsteilnehmers (5) oder mittels des Telekommunikationsnetzes (4) des zweiten Kommunikationsteilnehmers (5) und eines weiteren Telekommunikationsnetzes (2) des ersten Kommunikationsteilnehmers (1) verbunden sind, wobei die Zusatzinformation (100) an den zweiten Kommunikationsteilnehmer (5) als Teil einer auf die Telefonverbindung bezogenen Anrufsignalisierung übertragen wird und wobei die Zusatzinformation (100) eine Bildinformation (130) derart ist oder aufweist, dass die Bildinformation (130) mittels einer synthetischen Bildgenerierung ausgehend von einer ersten Textinformation (120) und/oder von einer zweiten Textinformation (125) generiert ist, wobei das Verfahren die nachfolgenden Schritte aufweist:
-- in einem ersten Schritt wird die Bildinformation (130) umfassend die erste Textinformation (120) und/oder umfassend die zweite Textinformation (125) generiert,
-- in einem dem ersten Schritt nachfolgenden zweiten Schritt wird die Bildinformation (130) als Zusatzinformation (100) mittels wenigstens des Telekommunikationsnetzes (4) an den zweiten Kommunikationsteilnehmer (5) übertragen.

2. Verfahren nach Anspruch 1, **dadurch gekennzeichnet, dass** die erste Textinformation (120) eine sich auf den ersten Kommunikationsteilnehmer (1) beziehende Information ist und dass die zweite Textinformation (125) eine sich auf das Telekommunikationsnetz (4) oder das weitere Telekommunikationsnetz (2) oder ein intermediäres Telekommunikationsnetz (3) beziehende Information ist,
wobei insbesondere die Bildinformation (130), die die Zusatzinformation (100) ist oder von dieser aufgewiesen wird, auf der Basis einer Ursprungsbildinformation (110) generiert wird, wobei insbesondere die Bildinformation (130) als Ergänzung auf der Ursprungsbildinformation (110) eingefügt wird und/oder die Ursprungsbildinformation (110) zumindest teilweise ersetzt, wobei die Ursprungsbildinformation (110) insbesondere durch den ersten Kommunikationsteilnehmer (1) und/oder durch das weitere Telekommunikationsnetz (2) und/oder durch das weitere Telekommunikationsnetz (4) übertragen wird.

3. Verfahren nach einem der Ansprüche 1 oder 2, **dadurch gekennzeichnet, dass** die Bildinformation (130) beim ersten Kommunikationsteilnehmer (1) gemäß einer oder mehrerer der nachfolgenden Alternativen generiert wird:
-- die der ersten Textinformation (120) und/oder zweiten Textinformation (125) zugrundeliegenden Informationen werden beim ersten Kommunikationsteilnehmer erfasst, insbesondere unter Nutzung einer graphischen Benutzerschnittstelle,
-- die der ersten Textinformation (120) und/oder zweiten Textinformation (125) zugrundeliegenden Informationen werden aus beim ersten Kommunikationsteilnehmer (1) aus bereits vorhandenen Daten (1a) generiert,
-- die der ersten Textinformation (120) und/oder zweiten Textinformation (125) zugrundeliegenden Informationen werden durch den ersten Kommunikationsteilnehmer (1) von einem übergeordnetem Datenlieferanten (6) bezogen, insbesondere mithilfe einer direkten Abfrage von Daten (6a) durch den ersten Kommunikationsteilnehmer (1) beim Datenlieferanten (6) oder mithilfe einer Abfrage von beim ersten Kommunikationsteilnehmer (1) zwischengespeicherten Daten (1b) des Datenlieferanten (6) .

4. Verfahren nach einem der vorhergehenden Ansprüche 1 oder 2, **dadurch gekennzeichnet, dass** die Bildinformation (130) durch das weitere Telekommunikationsnetz (2) gemäß einer oder mehrerer der nachfolgenden Alternativen generiert wird:
-- die der ersten Textinformation (120) und/oder zweiten Textinformation (125) zugrundeliegenden Informationen werden aus einer Datenbank (2a) des weiteren Telekommunikationsnetzes (2) bezogen,
-- die der ersten Textinformation (120) und/oder zweiten Textinformation (125) zugrundeliegenden Informationen werden durch das weitere Telekommunikationsnetz (2) von einem übergeordnetem Datenlieferanten (6) bezogen, insbesondere mithilfe einer direkten Abfrage von Daten (2b) durch das weitere Telekommunikationsnetz (2) beim Datenlieferanten (6).

5. Verfahren nach einem der Ansprüche 1 oder 2, **dadurch gekennzeichnet, dass** die Bildinformation (130) durch das intermediäre Telekommunikationsnetz (3) gemäß einer oder mehrerer der nachfolgenden Alternativen generiert wird:
-- die der ersten Textinformation (120) und/oder zweiten Textinformation (125) zugrundeliegenden Informationen werden aus einer Datenbank (3a) des intermediären Telekommunikationsnetzes (3) bezogen,
-- die der ersten Textinformation (120) und/oder zweiten Textinformation (125) zugrundeliegenden Informationen werden durch das intermediäre Telekommunikationsnetz (3) von einem übergeordneten Datenlieferanten (6) bezogen, insbesondere mithilfe einer direkten Abfrage von Daten (3b) durch das intermediäre Telekommunikationsnetz (3) beim Datenlieferanten (6).

6. Verfahren nach einem der Ansprüche 1 oder 2, **dadurch gekennzeichnet, dass** die Bildinformation (130) durch das Telekommunikationsnetz (4) gemäß einer oder mehrerer der nachfolgenden Alternativen generiert wird:
-- die der ersten Textinformation (120) und/oder zweiten Textinformation (125) zugrundeliegenden Informationen werden aus einer Datenbank (4a) des Telekommunikationsnetz (4) bezogen,
-- die der ersten Textinformation (120) und/oder zweiten Textinformation (125) zugrundeliegenden Informationen werden durch das Telekommunikationsnetz (4) von einem übergeordneten Datenlieferanten (6) bezogen, insbesondere mithilfe einer direkten Abfrage von Daten (4b) durch das Telekommunikationsnetz (4) beim Datenlieferanten (6).

7. System adaptiert zur Ubertragung einer Zusatzinformation (100) beim Aufbau und/oder beim Betrieb einer Telefonverbindung zwischen einem ersten Kommunikationsteilnehmer (1) und einem zweiten Kommunikationsteilnehmer (5), wobei der erste Kommunikationsteilnehmer (1) dazu adaptiert ist den Aufbau der Telefonverbindung zu initiieren und wobei der zweite Kommunikationsteilnehmer (5) dazu adaptiert ist der angerufene Kommunikationsteilnehmer zu sein, wobei beim Betrieb der Telefonverbindung der erste Kommunikationsteilnehmer (1) und der zweite Kommunikationsteilnehmer (5) dazu adaptiert sind mittels wenigstens eines Telekommunikationsnetzes (4) des zweiten Kommunikationsteilnehmers (5) oder mittels des Telekommunikationsnetzes (4) und eines weiteren Telekommunikationsnetzes (2) des ersten Kommunikationsteilnehmers (1) verbunden zu sein, wobei die Zusatzinformation (100) dazu adaptiert ist an den zweiten Kommunikationsteilnehmer (5) als Teil einer auf die Telefonverbindung bezogenen Anrufsignalisierung übertragen zu werden und wobei die Zusatzinformation (100) eine Bildinformation (130) derart ist oder aufweist, dass die Bildinformation (130) mittels einer synthetischen Bildgenerierung ausgehend von einer ersten Textinformation (120) und/oder von einer zweiten Textinformation (125) generiert ist, wobei das System derart konfiguriert ist, dass die Bildinformation (130) umfassend die erste Textinformation (120) und/oder umfassend die zweite Textinformation (125) generiert wird und nachfolgend die Bildinformation (130) dazu adaptiert ist als Zusatzinformation (100) mittels wenigstens des Telekommunikationsnetzes (4) an den zweiten Kommunikationsteilnehmer (5) übertragen zu werden.

8. Telekommunikationsnetz (2, 3, 4) zur Verwendung in einem System nach Anspruch 7 zur Übertragung einer Zusatzinformation (100) beim Aufbau und/oder beim Betrieb einer Telefonverbindung zwischen einem ersten Kommunikationsteilnehmer (1) und einem zweiten Kommunikationsteilnehmer (5), wobei der erste Kommunikationsteilnehmer (1) den Aufbau der Telefonverbindung initiiert und wobei der zweite Kommunikationsteilnehmer (5) der angerufene Kommunikationsteilnehmer ist.

9. Computerprogramm mit Programmcodemitteln, mit deren Hilfe die Schritte eines Verfahrens nach einem der Ansprüche 1 bis 6 durchführbar sind, wenn das Computerprogramm auf einer programmierbaren Einrichtung, als Teil des Telekommunikationsnetzes (4) oder als Teil des weiteren Telekommunikationsnetzes (2) oder als Teil des intermediären Telekommunikationsnetzes (3), ausgeführt wird.

10. Computerprogrammprodukt mit einem computerlesbaren Medium und einem auf dem computerlesbaren Medium gespeicherten Computerprogramm mit Programmcodemitteln zur Übertragung einer Zusatzinformation (100) beim Aufbau und/oder beim Betrieb einer Telefonverbindung zwischen einem ersten Kommunikationsteilnehmer (1) und einem zweiten Kommunikationsteilnehmer (5), die dazu geeignet sind, dass die Schritte eines Verfahrens nach einem der Ansprüche 1 bis 6 durchführbar sind, wenn das Computerprogramm auf einer programmierbaren Einrichtung, als Teil des Telekommunikationsnetzes (4) oder als Teil des weiteren Telekommunikationsnetzes (2) oder als Teil des intermediären Telekommunikationsnetzes (3), ausgeführt wird.

## Claims

1. Method for transmitting additional information (100) during the setup and/or operation of a telephone connection between a first communication participant (1) and a second communication participant (5), the first communication participant (1) initiating the setup of the telephone connection and the second communication participant (5) being the called communication participant, the first communication participant (1) and the second communication participant (5) being connected via at least one telecommunication network (4) of the second communication participant (5) or by means of the telecommunication network (4) of the second communication participant (5) and a further telecommunication network (2) of the first communication participant (1) during the operation of the telephone connection, the additional information (100) being transmitted to the second communication participant (5) as a part of call signalling related to the telephone connection, and the additional information (100) being or comprising image information (130) in such a way that the image information (130) is generated from first text information (120) and/or from second text information (125) by synthetic image generation, wherein the method includes the following steps:
- in a first step, the image information (130) comprising the first text information (120) and/or comprising the second text information (125) is generated,
- in a second step subsequent to the first step, the image information (130) is transmitted to the second communication participant (5) as additional information (100) via at least the telecommunication network (4).

2. Method according to claim 1, **characterised in that** the first text information (120) is information relating to the first communication participant (1) and **in that** the second text information (125) is information relating to the telecommunication network (4) or to the further telecommunication network (2) or to an intermediate telecommunication network (3),
in particular the image information (130) which constitutes or is comprised by the additional information (100) being generated on the basis of original image information (110), in particular the image information (130) being inserted as a supplement to the original image information (110) and/or replacing the original image information (110) at least in part, the original image information (110) being transmitted in particular by the first communication participant (1) and/or by the further telecommunication network (2) and/or by the further telecommunication network (4) .

3. Method according to either claim 1 or claim 2, **characterised in that** the image information (130) is generated at the first communication participant (1) in accordance with one or more of the following options:
- the information underlying the first text information (120) and/or second text information (125) is captured at the first communication participant, in particular using a graphical user interface,
- the information underlying the first text information (120) and/or second text information (125) is generated from data (1a) already present at the first communication participant (1),
- the information underlying the first text information (120) and/or second text information (125) is received by the first communication participant (1) from a superordinate data supplier (6), in particular **in that** the first communication participant (1) directly queries data (6a) from the data supplier (6) or **in that** data (1b) of the data supplier (6) which are buffered at the first communication participant (1) are queried.

4. Method according to either claim 1 or claim 2, **characterised in that** the image information (130) is generated by the further telecommunication network (2) in accordance with one or more of the following options:
- the information underlying the first text information (120) and/or second text information (125) is obtained from a database (2a) of the further telecommunication network (2),
- the information underlying the first text information (120) and/or second text information (125) is received by the further telecommunication network (2) from a superordinate data supplier (6), in particular **in that** the further telecommunication network (2) directly queries data (2b) from the data supplier (6).

5. Method according to either claim 1 or claim 2, **characterised in that** the image information (130) is generated by the intermediate telecommunication network (2) in accordance with one or more of the following options:
- the information underlying the first text information (120) and/or second text information (125) is obtained from a database (3a) of the intermediate telecommunication network (3),
- the information underlying the first text information (120) and/or second text information (125) is received by the intermediate telecommunication network (3) from a superordinate data supplier (6), in particular **in that** the intermediate telecommunication network (3) directly queries data (3b) from the data supplier (6).

6. Method according to either claim 1 or claim 2, **characterised in that** the image information (130) is generated by the telecommunication network (4) in accordance with one or more of the following options:
- the information underlying the first text information (120) and/or second text information (125) is obtained from a database (4a) of the telecommunication network (4),
- the information underlying the first text information (120) and/or second text information (125) is received by the telecommunication network (4) from a superordinate data supplier (6), in particular **in that** the telecommunication network (4) directly queries data (4b) from the data supplier (6).

7. System suitable to transmit additional information (100) during the setup and/or operation of a telephone connection between a first communication participant (1) and a second communication participant (5), the first communication participant (1) being suitable to initiate the setup of the telephone connection and the second communication participant (5) being suitable to be the called communication participant, the first communication participant (1) and the second communication participant (5) being suitable to be connected via at least one telecommunication network (4) of the second communication participant (5) or by means of the telecommunication network (4) of the second communication participant (5) and a further telecommunication network (2) of the first communication participant (1) during the operation of the telephone connection, the additional information (100) being suitable to be transmitted to the second communication participant (5) as a part of call signalling related to the telephone connection, and the additional information (100) being or comprising image information (130) in such a way that the image information (130) is generated from first text information (120) and/or from second text information (125) by synthetic image generation, wherein the system is configured in such a way that the image information (130) comprising the first text information (120) and/or comprising the second text information (125) is generated and subsequently the image information (130) is suitable to be transmitted to the second communication participant (5) as additional information (100) via at least the telecommunication network (4).

8. Telecommunication network (2, 3, 4) for use in a system according to claim 7 for transmitting additional information (100) during the setup and/or operation of a telephone connection between a first communication participant (1) and a second communication participant (5), the first communication participant (1) initiating the setup of the telephone connection and the second communication participant (5) being the called communication participant.

9. Computer program with program code means with which the steps of a method according to any of claims 1 to 6 can be carried out when the computer program is run on a programmable device as part of the telecommunication network (4) or as part of the further telecommunication network (2) or as part of the intermediate telecommunication network (3).

10. Computer program product comprising a computer-readable medium and a computer program stored on the computer-readable medium with program code means for transmitting additional information (100) during the setup and/or operation of a telephone connection between a first communication participant (1) and a second communication participant (5), which are appropriate for the steps of a method according to any of claims 1 to 6 to be able to be carried out when the computer program is run on a programmable device as part of the telecommunication network (4) or as part of the further telecommunication network (2) or as part of the intermediate telecommunication network (3).

## Revendications

1. Procédé de transmission d'une information supplémentaire (100) lors de l'établissement et/ou du fonctionnement d'une liaison téléphonique entre un premier partenaire de communication (1) et un deuxième partenaire de communication (5), dans lequel le premier partenaire de communication (1) initie l'établissement de la liaison téléphonique et dans lequel le deuxième partenaire de communication (5) est le partenaire de communication appelé [called communication user], dans lequel, lors du fonctionnement de la liaison téléphonique, le premier partenaire de communication (1) et le deuxième partenaire de communication (5) sont reliés au moyen d'au moins un réseau de télécommunication (4) du deuxième partenaire de communication (5) ou au moyen du réseau de télécommunication (4) du deuxième partenaire de communication (5) et d'un autre réseau de télécommunication (2) du premier partenaire de communication (1), dans lequel l'information supplémentaire (100) est transmise au deuxième partenaire de communication (5) comme partie d'une signalisation d'appel se rapportant à la liaison téléphonique et dans lequel l'information supplémentaire (100) est ou présente une information d'image (130) de telle sorte que l'information d'image (130) est générée au moyen d'une génération d'image synthétique à partir d'une première information textuelle (120) et/ou d'une deuxième information textuelle (125), le procédé comprenant les étapes suivantes :
- dans une première étape, l'information d'image (130) comprenant la première information textuelle (120) et/ou comprenant la deuxième information textuelle (125) est générée,
- dans une deuxième étape suivant la première étape, l'information d'image (130) est transmise en tant qu'information supplémentaire (100) au moyen d'au moins le réseau de télécommunication (4) au deuxième participant de communication (5).

2. Procédé selon la revendication 1, **caractérisé en ce que** la première information textuelle (120) est une information se rapportant au premier participant de communication (1) et **en ce que** la deuxième information textuelle (125) est une information se rapportant au réseau de télécommunication (4), à l'autre réseau de télécommunication (2) ou à un réseau de télécommunication intermédiaire (3),
dans lequel, en particulier, l'information d'image (130), qui est l'information supplémentaire (100) ou qui est présentée par celle-ci, est générée sur la base d'une information d'image d'origine (110), dans lequel, en particulier, l'information d'image (130) est insérée en tant que complément sur l'information d'image d'origine (110) et/ou remplace au moins partiellement l'information d'image d'origine (110), dans lequel l'information d'image d'origine (110) est transmise, en particulier, par le premier partenaire de communication (1) et/ou par l'autre réseau de télécommunication (2) et/ou par l'autre réseau de télécommunication (4).

3. Procédé selon l'une des revendications 1 ou 2, **caractérisé en ce que** l'information d'image (130) est générée chez le premier partenaire de communication (1) selon une ou plusieurs des alternatives suivantes :
- les informations à la base de la première information textuelle (120) et/ou de la deuxième information textuelle (125) sont saisies chez le premier partenaire de communication, en particulier en utilisant une interface utilisateur graphique,
- les informations à la base de la première information textuelle (120) et/ou de la deuxième information textuelle (125) sont générées à partir de données (1a) déjà existantes chez le premier partenaire de communication (1),
- les informations à la base de la première information textuelle (120) et/ou de la deuxième information textuelle (125) sont obtenues par le premier partenaire de communication (1) auprès d'un fournisseur de données (6) de niveau supérieur, en particulier à l'aide d'une interrogation directe de données (6a) par le premier partenaire de communication (1) auprès du fournisseur de données (6) ou à l'aide d'une interrogation de données (1b) du fournisseur de données (6) stockées temporairement chez le premier partenaire de communication (1).

4. Procédé selon l'une des revendications précédentes 1 ou 2, **caractérisé en ce que** l'information d'image (130) est générée par l'autre réseau de télécommunication (2) selon une ou plusieurs des alternatives suivantes :
- les informations à la base de la première information textuelle (120) et/ou de la deuxième information textuelle (125) sont obtenues à partir d'une base de données (2a) de l'autre réseau de télécommunications (2),
- les informations à la base de la première information textuelle (120) et/ou de la deuxième information textuelle (125) sont obtenues par l'autre réseau de télécommunication (2) auprès d'un fournisseur de données (6) de niveau supérieur, en particulier à l'aide d'une interrogation directe de données (2b) par l'autre réseau de télécommunication (2) auprès du fournisseur de données (6).

5. Procédé selon l'une des revendications 1 ou 2, **caractérisé en ce que** l'information d'image (130) est générée par le réseau de télécommunication intermédiaire (3) selon une ou plusieurs des alternatives suivantes :
- les informations à la base de la première information textuelle (120) et/ou de la deuxième information textuelle (125) sont obtenues à partir d'une base de données (3a) du réseau de télécommunication intermédiaire (3),
- les informations à la base de la première information textuelle (120) et/ou de la deuxième information textuelle (125) sont obtenues par le réseau de télécommunication intermédiaire (3) auprès d'un fournisseur de données (6) de niveau supérieur, en particulier à l'aide d'une interrogation directe de données (3b) par le réseau de télécommunication intermédiaire (3) auprès du fournisseur de données (6) .

6. Procédé selon l'une des revendications 1 ou 2, **caractérisé en ce que** l'information d'image (130) est générée par le réseau de télécommunication (4) selon une ou plusieurs des alternatives suivantes :
- les informations à la base de la première information textuelle (120) et/ou de la deuxième information textuelle (125) sont obtenues à partir d'une base de données (4a) du réseau de télécommunications (4),
- les informations à la base de la première information textuelle (120) et/ou de la deuxième information textuelle (125) sont obtenues par le réseau de télécommunication (4) auprès d'un fournisseur de données (6) de niveau supérieur, en particulier à l'aide d'une interrogation directe de données (4b) par le réseau de télécommunication (4) auprès du fournisseur de données (6).

7. Système adapté à la transmission d'une information supplémentaire (100) lors de l'établissement et/ou du fonctionnement d'une liaison téléphonique entre un premier partenaire de communication (1) et un deuxième partenaire de communication (5), dans lequel le premier partenaire de communication (1) est adapté à initier l'établissement de la liaison téléphonique, dans lequel le deuxième partenaire de communication (5) est adapté à être le partenaire de communication appelé,
dans lequel le premier partenaire de communication (1) et le deuxième partenaire de communication (5) sont adaptés, lors du fonctionnement de la liaison téléphonique, à être reliés au moyen d'au moins un réseau de télécommunication (4) du deuxième partenaire de communication (5) ou au moyen du réseau de télécommunication (4) et d'un autre réseau de télécommunication (2) du premier partenaire de communication (1),
dans lequel l'information supplémentaire (100) est adaptée à être transmise au deuxième partenaire de communication (5) comme partie d'une signalisation d'appel se rapportant à la liaison téléphonique et
dans lequel l'information supplémentaire (100) est ou présente une information d'image (130) de telle sorte que l'information d'image (130) est générée au moyen d'une génération d'image synthétique à partir d'une première information textuelle (120) et/ou d'une deuxième information textuelle (125),
dans lequel le système est configuré de telle sorte que l'information d'image (130) comprenant la première information textuelle (120) et/ou comprenant la deuxième information textuelle (125) est générée et que l'information d'image (130) est ensuite adaptée à être transmise en tant qu'information supplémentaire (100) au moyen d'au moins le réseau de télécommunications (4) au deuxième partenaire de communication (5).

8. Réseau de télécommunication (2, 3, 4) destiné à être utilisé dans un système selon la revendication 7 pour la transmission d'une information supplémentaire (100) lors de l'établissement et/ou du fonctionnement d'une liaison téléphonique entre un premier partenaire de communication (1) et un deuxième partenaire de communication (5), dans lequel le premier partenaire de communication (1) initie l'établissement de la liaison téléphonique et dans lequel le deuxième partenaire de communication (5) est le partenaire de communication appelé.

9. Programme d'ordinateur comprenant des moyens de code de programme à l'aide desquels les étapes d'un procédé selon l'une des revendications 1 à 6 peuvent être mises en œuvre lorsque le programme d'ordinateur est exécuté sur un dispositif programmable faisant partie du réseau de télécommunications (4), faisant partie du réseau de télécommunications supplémentaire (2) ou faisant partie du réseau de télécommunications intermédiaire (3).

10. Produit programme d'ordinateur comprenant un support lisible par ordinateur et un programme d'ordinateur stocké sur le support lisible par ordinateur comprenant des moyens de code de programme pour la transmission d'une information supplémentaire (100) lors de l'établissement et/ou du fonctionnement d'une liaison téléphonique entre un premier partenaire de communication (1) et un deuxième partenaire de communication (5), qui sont conçus pour que les étapes d'un procédé selon l'une des revendications 1 à 6 puissent être mises en œuvre lorsque le programme d'ordinateur est exécuté sur un dispositif programmable faisant partie du réseau de télécommunication (4), faisant partie du réseau de télécommunication supplémentaire (2) ou faisant partie du réseau de télécommunication intermédiaire (3).
